# EUROPÄISCHE PATENTSCHRIFT

(11) **EP 3 258 164 B1**
(45) Veröffentlichungstag und Bekanntmachung des Hinweises auf die Patenterteilung: **22.12.2021**
(21) Anmeldenummer: 17170453.9
(22) Anmeldetag: 10.05.2017
(51) Int. Cl.: F21S 41/10, F21S 41/25, F21S 41/265, F21S 45/60, G02B 27/00, G02B 3/00

(54) **OPTIK FÜR EINEN SCHEINWERFER, OPTIKANORDNUNG UND SCHEINWERFER**
OPTICS FOR A HEADLAMP, OPTICS ASSEMBLY AND HEADLAMP
OPTIQUE POUR UN PHARE, SYSTÈME D'OPTIQUE ET PHARE

(30) Priorität: 15.06.2016 DE 102016210636
(43) Veröffentlichungstag der Anmeldung: 20.12.2017
(73) Patentinhaber: OSRAM Beteiligungsverwaltung GmbH, 82031 Grünwald (DE)
(72) Erfinder: Feil, Thomas, 73574 lggingen (DE); Weissenberger, Daniel, 89537 Giengen (DE)
(74) Vertreter: OSRAM GmbH - GC IP

(56) Entgegenhaltungen:
- EP-A1- 2 278 630
- EP-A2- 2 746 646
- WO-A1-2015/111543
- DE-A1-102009 041 537
- DE-A1-102010 013 376
- DE-A1-102010 046 626
- DE-A1-102013 202 334
- DE-A1-102014 210 500
- DE-A1-102014 223 933

## Beschreibung

Die Erfindung geht aus von einer Optik für einen Scheinwerfer für ein Fahrzeug. Des Weiteren betriff die Erfindung eine Optikanordnung mit einer derartigen Optik und einen Scheinwerfer für ein Fahrzeug, der eine derartige Optik aufweist.

Aus dem Stand der Technik sind Matrixsysteme, beispielsweise für Frontscheinwerfer eines Fahrzeugs, bekannt, mit denen Adaptive-Driving-Beam-Anwendungen (ADB-Anwendungen) oder Adaptive-Frontlighting-Systems-Anwendungen (AFS-Anwendungen) ermöglicht sind. Bei einem Matrixsystem sind beispielsweise eine Vielzahl von lichtemittierenden Dioden (LEDs) matrixartig in einem Scheinwerfer angeordnet, die separat ansteuerbar und hierdurch ein- und ausschaltbar sowie dimmbar sind. Hierdurch können beispielsweise in Kombination mit einem Kamerasystem und einer bildverarbeitenden Elektronik Gegenverkehr und vorausfahrende Fahrzeuge erkannt und zumindest bereichsweise ausgeblendet werden. In Randbereichen eines ausgeleuchteten Bereichs, insbesondere in Randbereichen von ausgeblendeten Segmenten oder abgeschalteten LEDs, können allerdings nachteilig Farbsäume auftreten. Alternative oder zusätzlich zu LED-Lichtquellen können auch Laserlichtquellen verwendet werden, bei denen ein blauer Laserstrahl teilweise mittels eines Konversionselements (Leuchtstoff) in gelbes Konversionslicht umgewandelt wird, so dass in der Überlagerung von unkonvertiertem blauen Laserlicht und gelbem Konversionslicht weißes Mischlicht (Nutzlicht) entsteht. Die Farbkoordinaten des weißen Mischlichts sollen dabei bevorzugt im genormten ECE-Weißfeld gemäß der Richtlinie *ECE*/*324*/*Rev.1*/*Adb.47*/*Reg.No.48*/*Rev.12* liegen. Die DE 10 2009 041 537 A1 offenbart ein stabförmiges, als Lichtwellenleiter ausgebildetes optisches Element mit einem Kern aus Glas, der von transparentem Kunststoff ummantelt ist.

Die Aufgabe der vorliegenden Erfindung ist es, eine Optik und eine Optikanordnung, insbesondere für einen Scheinwerfer, zu schaffen, die vorrichtungstechnisch einfach ausgestaltet sind, eine hohe Festigkeit aufweisen und/oder eine Lichtstrahlung mit einer vergleichsweise hohen Genauigkeit ablenken. Außerdem ist es Aufgabe der Erfindung, einen Scheinwerfer für ein Fahrzeug zu schaffen, der ein geringes Gewicht aufweist und Licht mit einer hohen Genauigkeit abstrahlt. Des Weiteren ist es die Aufgabe der Erfindung, ein kostengünstiges Verfahren zum Herstellen einer Optik zu schaffen.

Die Aufgabe hinsichtlich der Optik wird gemäß den Merkmalen des Anspruchs 1 gelöst, hinsichtlich der Optikanordnung gemäß den Merkmalen des Anspruchs 5 und hinsichtlich des Scheinwerfers gemäß den Merkmalen des Anspruchs 6.

Besonders vorteilhafte Ausgestaltungen finden sich in den abhängigen Ansprüchen.

Erfindungsgemäß ist eine Optik für einen Fahrzeugscheinwerfer vorgesehen. Diese hat ein erstes als Linse wirkendes Optikelement.

Das Optikelement ist hierbei im Wesentlichen vollständig oder vollständig aus Silikon gebildet, welches für eine Verwendung in optischen Elementen geeignet ist, sich also beispielsweise durch Beständigkeit gegenüber Strahlung, insbesondere blauer Strahlung, auszeichnet, sowie eine gute Dichtfunktion aufweist. Beispielsweise kann hierfür das Silikon vom Typ Lumisil LR 7600/70 der Firma Wacker verwendet werden. Weiter ist erfindungsgemäß in dem ersten Optikelement ein zweites Optikelement, das zumindest teilweise aus Glas gebildet ist, angeordnet, und somit

im Vergleich zu Silikon aus einem härteren Material gebildet ist, also insbesondere eine höhere Steifigkeit gegenüber mechanischer Verformung aufweist.

Diese Lösung hat den Vorteil, dass mit dem ersten Optikelement Licht mit einer hohen Genauigkeit gebrochen werden kann, wobei die Optik im Vergleich zu einer vollständig aus Glas ausgebildeten Optik kostengünstig und einfach herstellbar ist. Des Weiteren ist das aus Silikon gebildete Optikelement mit geringem vorrichtungstechnisch Aufwand, beispielsweise durch Spritzgießen, beliebig geformt werden und somit beliebige Freiformen aufweisen, womit beispielsweise auch Hinterschneidungen, insbesondere materialabhängig, ermöglicht sind. Durch das härtere zweite Optikelement weist die Optik des Weiteren eine hohe Stabilität bei einem geringen Gewicht auf. Mit anderen Worten hat diese Lösung den Vorteil, dass die Optik nicht wie üblich aus Glas, sondern aus Silikon mit einem die Steifigkeit erhöhenden Inlay aus härterem Material gebildet ist. Das härtere Material im Inneren der Optik erhöht somit eine Steifigkeit des Gesamtsystems, was eine Montage, beispielsweise in einem Fahrzeugscheinwerfer, erleichtert und eine geringe Härte des Silikons ausgleicht. Des Weiteren ist vorteilhaft, dass das erste Optikelement als Federelement dient, um im Einsatz der Optik Stöße abzufangen. Außerdem ist vorteilhaft, dass das erste Optikelement, das aus Silikon gebildet ist, temperatur- und UV-beständig ist, womit keine Alterung oder im Wesentlichen keine Alterung im Vergleich zu konventionell eingesetzten optischen Kunststoffen auftritt, die beispielsweise aus Polycarbonat (PC) oder Polymethylmethacrylat (PMMA) gebildet sind. Durch das Silikon ist des Weiteren eine erhebliche Gewichtsreduktion erreicht.

Somit können beispielsweise eine Ein- und Auskoppelfläche des ersten Optikelements durch Silikon gebildet sein. Des Weiteren ist das zweite Optikelement vorzugsweise in einem das erste Optikelement durchsetzenden Strahlengang angeordnet.

Das Fahrzeug kann ein Luftfahrzeug oder ein wassergebundenes Fahrzeug oder ein landgebundenes Fahrzeug sein. Das landgebundene Fahrzeug kann ein Kraftfahrzeug oder ein Schienenfahrzeug oder ein Fahrrad sein. Besonders bevorzugt ist die Verwendung des Fahrzeugscheinwerfers in einem Lastkraftwagen oder Personenkraftwagen oder Kraftrad.

Erfindungsgemäß ist das zweite Optikelement zumindest teilweise oder im Wesentlichen vollständig oder vollständig aus Glas gebildet ist, insbesondere Glas, welches eine hohe Lichtdurchlässigkeit und eine gegenüber dem Silikon verschiedene Abbe-Zahl aufweist. Des Weiteren kann mit dem Glas kostengünstig und einfach eine mechanische Steifigkeit der Optik erhöht werden.

Erfindungsgemäß wird das zweite Optikelement ebenfalls als Linse ausgebildet oder ist eine Linse. Somit kann die Optik auf einfache Weise zwei Linsen aufweisen. Das zweite Optikelement kann somit zur Erhöhung einer Festigkeit für die Optik eingesetzt werden und zusätzlich Licht an zumindest einer Oberfläche durch Brechung ablenken.

Ist die Optik als Achromat ausgebildet, so kann sie neben den vorstehend erläuterten Vorteilen zusätzlich die eingangs erläuterten in Randbereichen auftretenden Farbsäume verringern oder verhindern. Derartige Farbsäume werden durch Dispersion der abbildenden Optik, das heißt in Abhängigkeit des Brechungsindexes der Wellenlänge des Lichts, verursacht. Zur Vermeidung der Farbsäume muss somit eine Farbkorrektur erfolgen, die durch den Achromat erreicht wird. Im Stand der Technik sind derartige Achromate sehr kostenintensiv und weisen ein hohes Gewicht auf, was sie für einen Einsatz in Fahrzeugen unattraktiv macht. Durch die als Achromat ausgebildete Optik ist somit ein Einsatz in einem Fahrzeug technisch und wirtschaftlich sinnvoll. Da eine Linse des Achromaten aus Silikon gebildet ist, ist dieser somit billiger als ein vollständig aus Glas bestehender Achromat.

Erfindungsgemäß ist das zweite Optikelement vom ersten Optikelement vollständig umschlossen, wodurch zumindest eine formschlüssige Verbindung erreicht ist und beispielsweise kein zusätzliches Klebemittel erforderlich ist. Mit anderen Worten ist die Glaslinse komplett von Silikon umgeben, insbesondere ohne einen Lufteinschluss. Somit ist gewährleitet, dass das Glas und das Silikon in einem mechanischen Kontakt verbleiben, da ein Eindringen von Luft im Bereich der Grenzfläche nicht möglich ist. Alternativ oder zusätzlich kann vorgesehen sein, dass eine Stelle oder mehrere Stellen, an denen ein Halteelement oder mehrere Halteelemente angebracht ist/sind, nachträglich, beispielsweise durch vergießen, abgedichtet ist/sind.

In weiterer Ausgestaltung der Erfindung ist dem zweiten Optikelement eine Haltestruktur, insbesondere an ihrem Randbereich, zugeordnet und/oder mit dem zweiten Optikelement verbunden. Hierdurch ist eine exakte Positionierung des zweiten Optikelements, beispielsweise in der Herstellung, insbesondere bei einem Silikon-Spritzgusswerkzeug, ermöglicht. Bei der Haltestruktur handelt es sich beispielsweise um einen Kunststoff- oder Blechhalter. Als Haltestruktur kann auch ein Element oder können auch Elemente vorgesehen sein, das oder die elastisch und/oder silikonabweisend ist/sind, um das zweite optische Element im Spritzgusswerkzeug zu positionieren. Denkbar ist auch, dass als Haltestruktur ein oder mehrere, insbesondere elastische, Zapfen vorgesehen sind. Diese können beispielsweise auf Dorne im Spritzgusswerkzeug aufgesteckt werden.

Die Haltestruktur, insbesondere die Zapfen, kann dann vom Silikon bei einem Spritzgussverfahren umschlossen werden, womit sie einen Teil der Optik bildet. Die Haltestruktur, insbesondere die Zapfen, kann dann für ein Referenzier- oder Befestigungszweck der Optik im Fahrzeugscheinwerfer eingesetzt werden.

In weiterer Ausgestaltung der Erfindung ist denkbar, dass das zweite Optikelement, insbesondere im Randbereich, eine Aussparung oder mehrere Aussparungen oder Bohrungen aufweist. Hierdurch können weitere formschlüssige Verbindungen zwischen dem ersten und zweiten Optikelement geschaffen werden, um, insbesondere thermische, Dehnungseffekte des Silikons zu hemmen, um Änderungen in der optischen Abbildung zu minimieren.

Vorzugsweise ist an einem die Großflächen der Optik umfassenden Rand ein Dichtbund aus Silikon ausgebildet. Dieser kann als Abdichtung zwischen der Optik und einer Optikhalterung, beispielsweise im Fahrzeugscheinwerfer, eingesetzt werden.

Ist die Optik als Achromat ausgebildet, so kann das erste Optikelement beispielsweise plan-konvex und/oder bi-konvex und/oder bi-konkav ausgebildet sein (bezogen auf seine Außengeometrie) , und das zweite Optikelement bi-konvex ausgebildet sein. Einkoppelflächen der Optikelemente können hierbei vorzugsweise etwa im Parallelabstand zueinander angeordnet sein, womit das erste Optikelement in diesem Bereich eine etwa konstante Dicke aufweist. Des Weiteren ist denkbar, dass Auskoppelflächen der Optikelemente einen größeren Abstand zueinander als bei den Einkoppelflächen aufweisen und insbesondere das erste Optikelement in diesem Bereich eine nicht konstante Dicke aufweist. Andere Linsenformen sollen ebenfalls möglich sein, beispielsweise kann das erste Optikelement plan-konvex und das zweite Optikelement plan-konkav ausgebildet sein.

Erfindungsgemäß ist das zweite Optikelement vollständig im ersten Optikelement eingeschlossen. Das erste Optikelement kann beispielsweise bi-konvex ausgestaltet sein.

Zusätzlich kann das erste und/oder zweite optische Element Antireflex-Beschichtungen aufweisen.

Ist die Optik als Apochromat ausgebildet, so ist vorzugsweise ein drittes Optikelement in dem ersten Optikelement angeordnet. Das dritte Optikelement ist hierbei ebenfalls vorzugsweise zumindest teilweise oder im Wesentlichen vollständig oder vollständig aus Glas gebildet. Weiter vorteilhaft unterscheiden sich die Materialien des zweiten und dritten Optikelements voneinander. Somit können Glaslinsen aus verschiedenen, geeigneten Gläsern ausgebildet sein. Bei drei Optikelementen kann das erste Optikelement vorteilhafterweise zwischen dem zweiten und dritten Optikelement als Linse wirken. Somit kann der mit Silikon gefüllte Bereich zwischen den Glaslinsen eine dritte Linse bilden. Das zweite und dritte Optikelement weisen vorzugsweise eine gleiche Ausgestaltung auf. Mit Vorteil sind das zweite und dritte Optikelement bi-konvex ausgebildet. Das zweite und dritte Optikelement, also die beiden Glaslinsen, bilden vorzugsweise eine Vorbaugruppe. Insbesondere können sie hierbei durch eine Haltestruktur oder eine Haltevorrichtung zueinander vorfixiert sein und somit gemeinsam in das Spritzgusswerkzeug eingelegt werden.

Bei einem weiteren bevorzugten Ausführungsbeispiel ist eine Matrix oder ist ein Array von zweiten Optikelementen vorgesehen, die von einer Matrix oder von einem Array von ersten Optikelementen umfasst sind. Einem jeweiligen zweiten Optikelement kann dann ein jeweiliges erstes Optikelement zugeordnet sein. Eine derartige Optik ist äußerst vorteilhaft für beispielsweise Matrixsysteme in Frontscheinwerfern einsetzbar. Die zweiten Optikelemente sind beispielsweise zusammenhängend ausgebildet und können beispielsweise eine einstückige Glasplatte bilden. Ein jeweiliges zweites Optikelement ist dann innerhalb der Glasplatte als Einzelglaslinse vorgesehen. Denkbar ist auch, die zweiten Optikelemente nicht einstückig, sondern auf andere Weise mechanisch zu verbinden. Sind die zweiten Optikelemente verbunden oder einstückig miteinander ausgebildet, so können diese auf vorrichtungstechnisch einfache Weise als Verbund in das Spritzgusswerkzeug eingelegt werden. Das erste Optikelement umschließt vollständig die zweiten Optikelemente.

Somit ist die Matrix von ersten Optikelementen einstückig ausgestaltet. Die Optik kann dann blockartig ausgebildet sein. Ist die matrixartig ausgebildete Optik als Achromat eingesetzt, so hat diese hinsichtlich ihrer ersten Optikelemente vorzugsweise eine Vielzahl von konvexen Einkoppelflächen, die jeweils einem jeweiligen zweiten Optikelement zugeordnet sind, wobei die zweiten Optikelemente jeweils bi-konvex ausgebildet sein können. Auskoppelflächen der ersten Optikelemente können etwa konkav ausgebildet sein.

Weiter vorteilhaft ist die Optik derart ausgebildet oder designt, dass eine optische Abbildung bei einer für den Einsatzzweck typischen oder üblichen oder durchschnittlichen Anwendungstemperatur, beispielsweise besonders in dem für den Automobilbereich relevanten Temperaturbereich von -40°C bis +125°C, optimal ist. Hierdurch ist auf einfache Weise eine Temperaturkompensation geschaffen, da Silikon eine vergleichsweise hohe thermische Ausdehnung sowie eine Abhängigkeit eines Brechungsindexes von der Temperatur ausweist.

Vorzugsweise ist eine Optikanordnung mit einer Optik gemäß einem oder mehreren der vorhergehenden Aspekte vorgesehen. Die Optikanordnung hat hierbei vorteilhafterweise eine Kühlung und/oder eine Heizung. Somit ist eine hohe Genauigkeit einer optischen Abbildung der Optik bei unterschiedlichsten Temperaturen gewährleistet. Die Kühlung und/oder Heizung erfolgt vorzugsweise durch Konvektion, beispielsweise über einen warmen oder kalten Luftstrom, kann aber auch andere Heiz- bzw. Kühlelemente umfassen, wie z.B. elektrische Widerstandsheizdrähte, bestrombare ITO-Beschichtungen, Peltierelemente, Infrarotstrahler, etc. Die Heiz- bzw. Kühlelemente können auch vom Silikon umschlossen sein. Alternativ oder zusätzlich ist denkbar, eine Positionsregeleinrichtung, beispielsweise eine Positionsbestimmung über Photodetektoren, verbunden mit einem sukzessiven Nachregeln, insbesondere entlang der optischen Achse, also entlang der Strahlrichtung, für die Optik vorzusehen. Hierdurch kann eine Nachregelung der Position der Optik oder des Linsensystems entlang der optischen Achse erfolgen, um einen Fokuspunkt des Systems optimal einzustellen, falls sich dieser beispielsweise in Abhängigkeit der Temperatur ändert.

Erfindungsgemäß ist ein Scheinwerfer für ein Fahrzeug mit einer Optik gemäß einem oder mehreren der vorhergehenden Aspekte vorgesehen. Die Optik ist vorzugsweise im Nachgang einer oder mehrerer Strahlungsquellen angeordnet.

Die mindestens eine Strahlungsquelle kann als Halbleiter-Lichtquelle oder als eine Licht emittierende Diode (LED), insbesondere eine LED, bei welcher blaue Primärstrahlung anteilig mittels Konversionsleuchtsoff in gelber Konversionslicht umgewandelt wird, und/oder als eine organische LED (OLED), und/oder als eine Laserdiode und/oder als ein nach einem Laser Activated Remote Phosphor (LARP)-Prinzip arbeitendes Leuchtmittel, und/oder als eine Halogenlampe, und/oder als eine Gasentladungslampe (HID), und/oder als ein nach einem Digital Light Processing (DLP)-Prinzip arbeitender Projektor ausgebildet sein. Somit steht eine Vielzahl von Alternativen als eine Lichtquelle zur Verfügung.

Eine Licht emittierende Diode (LED) oder Leuchtdiode kann in Form mindestens einer einzeln gehäusten LED oder in Form mindestens eines LED-Chips, der eine oder mehrere Leuchtdioden aufweist, vorliegen. Es können mehrere LED-Chips auf einem gemeinsamen Substrat ("Submount") montiert sein und eine LED bilden oder einzeln oder gemeinsam beispielsweise auf einer Platine (z.B. FR4, Metallkernplatine, etc.) befestigt sein ("CoB" = Chip on Board). Die mindestens eine LED kann mit mindestens einer eigenen und/oder gemeinsamen Optik zur Strahlführung ausgerüstet sein, beispielsweise mit mindestens einer Fresnel-Linse oder einem Kollimator. Anstelle oder zusätzlich zu anorganischen LEDs, beispielsweise auf Basis von InGaN oder AlInGaP, sind allgemein auch organische LEDs (OLEDs, z.B. Polymer-OLEDs) einsetzbar. Die LED-Chips können direkt emittierend sein oder einen vorgelagerten Leuchtstoff aufweisen. Alternativ kann die LED eine Laserdiode oder eine Laserdiodenanordnung sein. Denkbar ist auch eine OLED-Leuchtschicht oder mehrere OLED-Leuchtschichten oder einen OLED-Leuchtbereich vorzusehen. Die Emissionswellenlängen der LED können im ultravioletten, sichtbaren oder infraroten Spektralbereich liegen. Bevorzugt emittieren die LED-Chips weißes Licht im genormten ECE-Weißfeld der Automobilindustrie.

Bei dem Scheinwerfer ist zwischen der erfindungsgemäßen Optik und den Strahlungsquellen vorzugsweise für eine jeweilige Strahlungsquelle oder für einen Teil der Strahlungsquellen oder für alle Strahlungsquellen eine Primäroptik vorgesehen, wobei dann die erfindungsgemäße Optik eine Sekundäroptik bilden kann.

Sind LEDs eingesetzt, deren Spektrum jeweils einen Peak im blauen und im gelben Spektralbereich aufweist, so ist vorteilhaft, die Optik als Achromat derart auszulegen, dass Brennweiten für beide Peak-Wellenlängen im Wesentlichen gleich oder gleich sind.

Der Scheinwerfer kann beispielsweise Teil eines Adaptive-Frontlighting-Systems (AFS) oder einer Adaptive-Driving-Beam-Anwendung (ADB) sein.

Weitere Anwendungsbereiche können beispielsweise Scheinwerfer für Effektlichtbeleuchtungen, Entertainmentbeleuchtungen, Architainmentbeleuchtungen, Allgemeinbeleuchtung, medizinische und therapeutische Beleuchtung, Horticulture etc. sein.

Bei einem nicht erfindungsgemäßen Verfahren zum Herstellen einer Optik gemäß einem oder mehreren der vorhergehenden Aspekte können folgende Schritte vorgesehen sein:
- Anordnen des zweiten Optikelements oder des Glases in einem Spritzgusswerkzeug, insbesondere über seine Haltestruktur,
- Umspritzen des zweiten Optikelements mit Silikon zum Ausbilden des ersten Optikelements.

Mit einem derartigen Verfahren kann somit kostengünstig die Optik hergestellt werden. Aufgrund der Spritzgussfertigung ist kein zusätzliches Kontakt- oder Klebemittel zum Verbinden der Optikelemente notwendig.

Bei dem Verfahren kann an dem die Großflächen der Optik umfassenden Rand ein Dichtbund angespritzt werden. Dies erfolgt beispielsweise beim Umspritzen des zweiten Optikelements oder in einem zusätzlichen Verfahrensschritt.

Im Folgenden soll die Erfindung anhand von Ausführungsbeispielen näher erläutert werden. Die Figuren zeigen:
Fig. 1a und 1b in einer perspektivischen Ansicht und einer Seitenansicht eine Optik gemäß einem ersten Ausführungsbeispiel
Fig. 2a und 2b in einer perspektivischen Ansicht und einer Seitenansicht die Optik gemäß einem zweiten Ausführungsbeispiel
Fig. 3a und 3b in einer perspektivischen Ansicht und einer Seitenansicht die Optik gemäß einem dritten Ausführungsbeispiel
Fig. 4a und 4b in einer perspektivischen Ansicht und einer Seitenansicht die Optik gemäß einem vierten Ausführungsbeispiel
Fig. 5a und 5b in einer Seitenansicht und einer perspektivischen Ansicht einen Scheinwerfer für ein Fahrzeug gemäß einer Ausführungsform
Fig. 6 in einem Ablaufdiagramm ein Herstellungsverfahren gemäß einer Ausführungsform

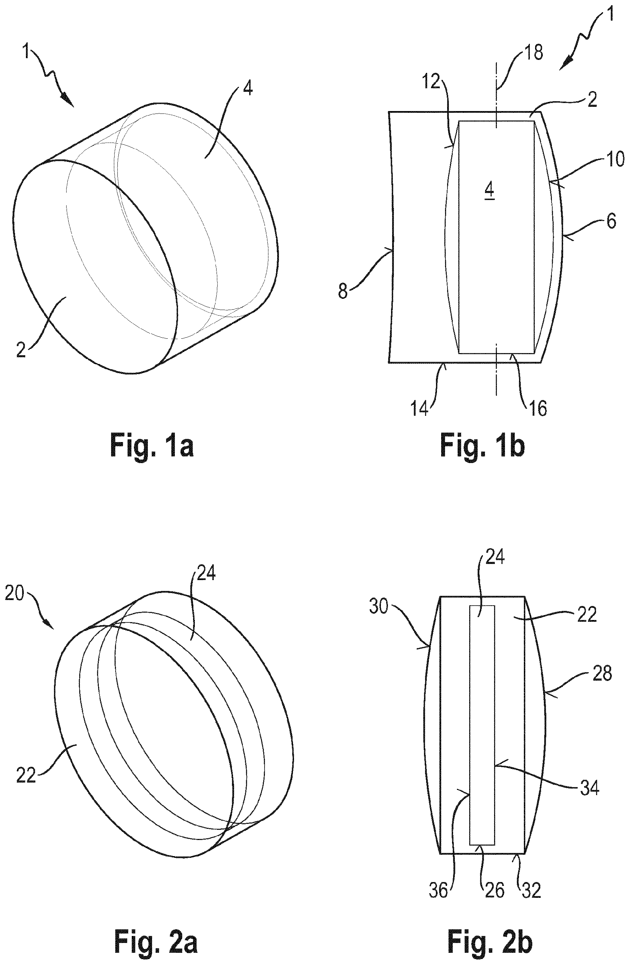

Gemäß Figur 1a hat die Optik 1 ein erstes Optikelement 2 und ein zweites Optikelement 4. Die Optik 1 ist hierbei als Achromat ausgestaltet. Das erste Optikelement 2 besteht hierbei im Wesentlichen vollständig aus Silikon. Dagegen besteht das zweite Optikelement 4 im Wesentlichen aus Glas. Das zweite Optikelement 4 ist des Weiteren als Inlay in dem ersten Optikelement 2 angeordnet und wird somit von dem ersten Optikelement 2 vollständig umfasst und eingeschlossen. Die für den Spritzvorgang optional verwendbaren Halteelemente bzw. Haltestellen sind in den Figuren nicht dargestellt.

Gemäß Figur 1b hat das erste Optikelement 2 der Optik 1 eine konvexe Einkoppelfläche 6 und eine leicht konkave Auskoppelfläche 8 (bei der hier vorliegenden Einstrahlung von der rechten Seite). Die in Strahlungsrichtung gesehen nach der Einkoppelfläche 6 vorgesehene Einkoppelfläche 10 des zweiten Optikelements 4 ist ebenfalls konvex ausgestaltet. Eine Auskoppelfläche 12 des zweiten Optikelements 4 ist auch konvex. Ein Abstand der Einkoppelflächen 6 und 10 ist zumindest im Wesentlichen gleich, womit das erste Optikelement 2 im Strahlengang zwischen den Einkoppelflächen 6 und 10 eine etwa konstante Dicke und/oder einen im Wesentlichen gleichen Krümmungsradius aufweisen. Eine Mantelfläche 14 oder ein Rand des ersten Optikelements 2 hat einen im Wesentlichen kreiszylindrischen Querschnitt. Das Gleiche gilt für eine Mantelfläche 16 oder einen Rand des zweiten Optikelements 4. Allerdings ist ein Durchmesser der Mantelfläche 16 kleiner als ein Durchmesser der Mantelfläche 14, womit das zweite Optikelement 4 vom ersten Optikelement 2 umgriffen ist. Die Optikelemente 2 und 4 sind vorzugsweise etwa koaxial zueinander angeordnet. Ein Abstand der Auskoppelflächen 8 und 12 ist größer als ein Abstand der Einkoppelflächen 6 und 10.

In Figur 1b ist mit einer Strich-Punkt-Linie schematisch eine Haltestruktur 18 dargestellt. Über diese kann das zweite Optikelement 4 in einem Spritzgusswerkzeug positioniert und gehaltert werden. Nach der Herstellung kann die Haltestruktur 18 einen Teil der Optik 1 bilden.

Eine Optik 20 gemäß Figur 2a hat ebenfalls ein erstes Optikelement 22 und ein zweites Optikelement 24. Gemäß Figur 2b ist das zweite Optikelement 24 etwa als planare Scheibe ausgestaltet und hat eine Mantelfläche 26 mit einem etwa kreiszylindrischen Querschnitt. Das zweite Optikelement 24 dient somit nicht als Linse, sondern ist eine mechanische Verstärkung für die Optik 20. Das erste Optikelement 22 ist bi-konvex ausgestaltet mit einer konvexen Einkoppelfläche 28 und einer konvexen Auskoppelfläche 30, die von einer Mantelfläche 32 mit einem etwa kreiszylindrischen Querschnitt umgriffen sind. Ein Abstand zwischen einer zur Einkoppelfläche 28 weisenden Optikfläche 34 des zweiten Optikelements 24 und der Einkoppelfläche 28 ist größer als ein Abstand zwischen einer zur Auskoppelfläche 30 weisenden Optikfläche 36 des zweiten Optikelements 24 und der Auskoppelfläche 30.

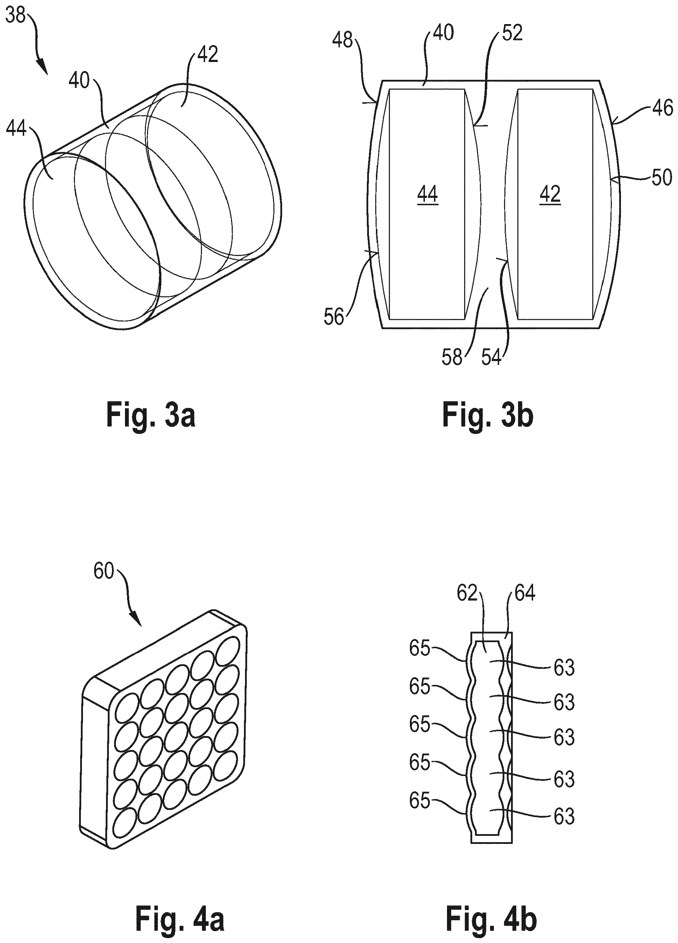

Gemäß Figur 3a hat eine Optik 38 ein erstes Optikelement 40, in das ein zweites Optikelement 42 und ein drittes Optikelement 44 eingesetzt sind. Bei der Optik 38 handelt es sich um einen Apochromat. Die Optikelemente 42 und 44 bestehen hierbei im Wesentlichen vollständig aus Glas.

Gemäß Figur 3b sind äußere Optikflächen 46 und 48 des ersten Optikelements 40 jeweils konvex ausgebildet. Die Optikelemente 42 und 44 sind jeweils bi-konvex ausgestaltet mit jeweils einer konvexen Einkoppelfläche 50, 52 und jeweils einer konvexen Auskoppelfläche 54, 56.

Zwischen der Einkoppelfläche 52 des Optikelements 44 und der Auskoppelfläche 54 des Optikelements 42 bildet das im Wesentlichen aus Silikon bestehende erste Optikelement 40 eine Linse 58 aus.

Gemäß Figur 3b ist eine Dicke zwischen der Optikfläche 46 und der Einkoppelfläche 50 gleich. Des Weiteren ist eine Dicke zwischen der Optikfläche 48 und der Auskoppelfläche 56 jeweils gleich. Die Dicken an sich können ebenfalls gleich sein.

Ein Durchmesser der Optikelemente 40 und 42 ist gemäß Figur 3b im Wesentlichen gleich und geringer als ein Durchmesser des Optikelements 40.

Gemäß Figur 4a ist eine matrixförmige Optik 60 dargestellt. Diese ist gemäß Figur 4b durch eine Matrix 62 von zweiten Optikelementen 63 gebildet, die von einer Matrix 64 aus ersten Optikelementen 65 umfasst ist. Die zweiten Optikelemente 63 sind hierbei einstückig ausgestaltet. Sie haben jeweils eine bi-konvexe Form. Die ersten Optikelemente 65 sind ebenfalls zusammenhängend oder einstückig ausgebildet und haben jeweils eine konvexe Einkoppelfläche und eine konkave Auskoppelfläche (bei der hier vorliegenden Einstrahlung von der linken Seite). Ein jeweiliges zweites Optikelement 63 bildet mit dem jeweilig zugeordneten ersten Optikelement 65 hierbei einen Achromat.

Gemäß Figur 4a ist die Optik 60 etwa blockförmig ausgestaltet.

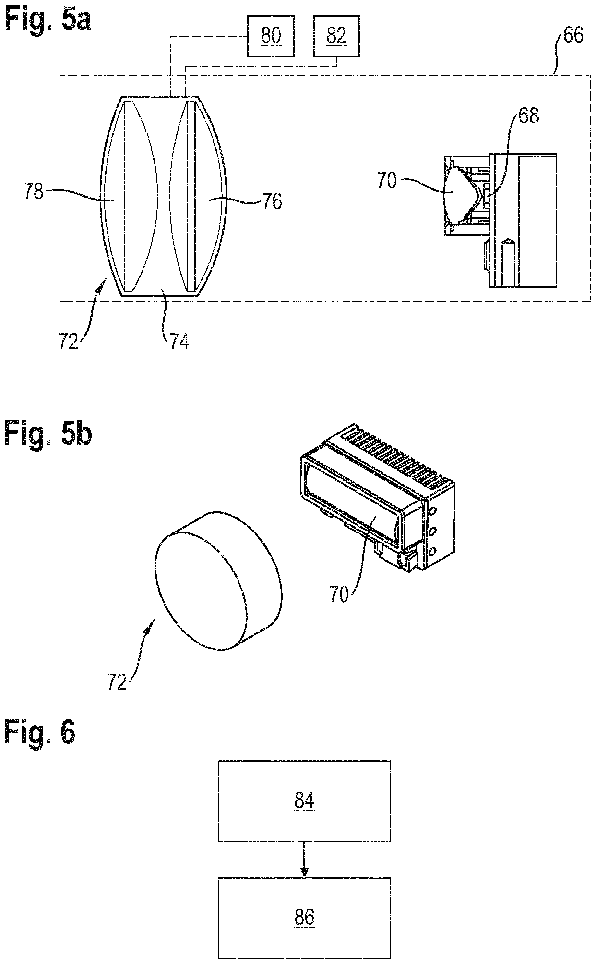

In Figur 5a ist ein Scheinwerfer 66 für ein Fahrzeug dargestellt. In diesem ist eine Reihe von Strahlungsquellen 68, beispielsweise Leuchtdioden (LEDs), angeordnet, denen eine Primäroptik 70 nachgeschaltet ist, siehe auch Figur 5b. Die Primäroptik 70 ist hierbei länglich ausgestaltet und die Strahlungsquellen 68 erstrecken sich etwa in einer Horizontalrichtung. Im Nachgang zu der Primäroptik 70 ist eine Optik 72 vorgesehen, die ein erstes Optikelement 74, ein zweites Optikelement 76 und ein drittes Optikelement 78 aufweist. Die Optik 72 entspricht hierbei etwa der Optik 38 aus den Figuren 3a und 3b. Um eine Temperatur der Optik 72 im Wesentlichen konstant zu halten, sind eine Kühlung und eine Heizung 80 beim Scheinwerfer 66 vorgesehen, die in Figur 5a schematisch dargestellt sind. Alternativ oder zusätzlich ist eine Positionsregeleinrichtung 82 für die Optik 72 beim Scheinwerfer 66 ausgebildet, die ebenfalls schematisch dargestellt ist.

Figur 6 zeigt ein nicht-erfindungsgemäßes Verfahren zur Herstellung einer Optik.

In einem ersten Verfahrensschritt 84 erfolgt hierbei eine Anordnung eines zweiten Optikelements, das zumindest im Wesentlichen aus Glas besteht, in einem Spritzgusswerkzeug, wobei hierfür eine Haltestruktur vorgesehen sein kann. In einem folgenden Schritt 86 wird das zweite Optikelement von Silikon umspritzt, wodurch das erste Optikelement gebildet wird und das zweite Optikelement ein Inlay bildet.

Bei den vorstehend erläuterten Ausführungsbeispielen weisen die Einkoppelflächen 10, 28, 50 und 52 jeweils einen kleineren Krümmungsradius als die zugeordneten Auskoppelflächen 12, 30, 54 und 56 auf.

Offenbart ist eine Optik für einen Fahrzeugscheinwerfer, die zum einen Teil aus Silikon und zum anderen Teil aus einem härteren Material gebildet ist. Der andere Teil ist hierbei vollständig vom Silikon umfasst.

### BEZUGSZEICHENLISTE

- Optik: 1
- erstes Optikelement: 2
- zweites Optikelement: 4
- Einkoppelfläche: 6
- Auskoppelfläche: 8
- Einkoppelfläche: 10
- Auskoppelfläche: 12
- Mantelfläche: 14
- Mantelfläche: 16
- Haltestruktur: 18
- Optik: 20
- erstes Optikelement: 22
- zweites Optikelement: 24
- Mantelfläche: 26
- Einkoppelfläche: 28
- Auskoppelfläche: 30
- Mantelfläche: 32
- Optikfläche: 34
- Optikfläche: 36
- Optik: 38
- erstes Optikelement: 40
- zweites Optikelement: 42
- drittes Optikelement: 44
- Optikfläche: 46
- Optikfläche: 48
- Einkoppelfläche: 50
- Einkoppelfläche: 52
- Auskoppelfläche: 54
- Auskoppelfläche: 56
- Linse: 58
- Optik: 60
- Matrix: 62
- Zweites Optikelement: 63
- Matrix: 64
- Erstes Optikelement: 65
- Scheinwerfer: 66
- Strahlungsquelle: 68
- Primäroptik: 70
- Optik: 72
- erstes Optikelement: 74
- zweites Optikelement: 76
- drittes Optikelement: 78
- Kühlung und Heizung: 80
- Positionsregeleinrichtung: 82
- Schritt: 84
- Schritt: 86

## Patentansprüche

1. Optik für Fahrzeugscheinwerfer, die ein erstes Optikelement (2) hat, das aus Silikon gebildet ist, und in dem ein zweites Optikelement (4) angeordnet ist, das zumindest teilweise aus Glas gebildet ist, **dadurch gekennzeichnet, dass** das zweite Optikelement (4) vom ersten Optikelement (2) vollständig umschlossen ist, wobei sowohl das erste Optikelement (2) als auch das zweite Optikelement (4) jeweils als Linse wirken.

2. Optik nach einem Anspruch 1, wobei diese ein Achromat (1) oder ein Apochromat (38) ist.

3. Optik nach einem der vorhergehenden Ansprüche, wobei dem zweiten Optikelement (4) eine Haltestruktur (18) zugeordnet ist.

4. Optik nach einem der vorhergehenden Ansprüche, wobei eine Matrix (62) oder ein Array von zweiten Optikelementen (63) vorgesehen ist, die von einer Matrix (64) oder von einem Array von ersten Optikelementen (65) umfasst ist, wobei einem jeweiligen zweiten Optikelement (63) ein jeweiliges erstes Optikelement (65) zugeordnet ist.

5. Optikanordnung mit einer Optik gemäß einem der vorhergehenden Ansprüche, wobei eine Kühlung (80) für die Optik (72) vorgesehen ist, und/oder oder wobei eine Heizung (80) für die Optik (72) vorgesehen ist, und/oder wobei eine Positionsregeleinrichtung (82) für die Optik (72) vorgesehen ist.

6. Scheinwerfer für ein Fahrzeug mit einer Optik gemäß einem der Ansprüche 1 bis 4 oder mit einer Optikanordnung gemäß Anspruch 5.

## Claims

1. Optical unit for vehicle headlights, having a first optics element (2) which is made of silicone and in which a second optics element (4) is arranged that is formed at least partially from glass, **characterized in that** the second optics element (4) is completely enclosed by the first optics element (2), wherein both the first optics element (2) and also the second optics element (4) each act as a lens.

2. Optical unit according to Claim 1, wherein it is an achromatic lens (1) or an apochromatic lens (38).

3. Optical unit according to either of the preceding claims, wherein the second optics element (4) is assigned a holding structure (18).

4. Optical unit according to one of the preceding claims, wherein a matrix (62) or an array of second optics elements (63) is provided, which is surrounded by a matrix (64) or by an array of first optics elements (65), wherein a respective second optics element (63) is assigned a respective first optics element (65).

5. Optics arrangement having an optical unit according to one of the preceding claims, wherein a cooling means (80) for the optical unit (72) is provided, and/or wherein a heating means (80) for the optical unit (72) is provided, and/or wherein a position adjustment device (82) for the optical unit (72) is provided.

6. Headlight for a vehicle having an optical unit according to one of Claims 1 to 4 or having an optics arrangement according to Claim 5.

## Revendications

1. Optique pour phare de véhicule automobile qui a un premier élément d'optique (2) qui est formé à partir de silicium, et dans lequel un second élément d'optique (4) est disposé, qui est au moins formé en partie à partir de verre, **caractérisé en ce que** le second élément d'optique (4) est entouré en totalité par le premier élément d'optique (2), dans laquelle aussi bien le premier élément d'optique (2) que le deuxième élément d'optique (4) agissent respectivement en tant que lentille.

2. Optique selon la revendication 1, dans laquelle celle-ci est un objectif achromatique (1) ou un objectif apochromatique (38).

3. Optique selon l'une quelconque des revendications précédentes, dans laquelle une structure de maintien (18) est associée au deuxième élément d'optique (4).

4. Optique selon l'une quelconque des revendications précédentes, dans laquelle une matrice (62) ou un groupe de deuxièmes éléments d'optique (63) est prévu(e), qui est englobé (e) par une matrice (64) ou un groupe de premiers éléments d'optique (65), dans laquelle un premier élément d'optique respectif (65) est associé à un deuxième élément d'optique respectif (63).

5. Agencement d'optique avec une optique selon l'une quelconque des revendications précédentes, dans lequel un refroidissement (80) est prévu pour l'optique (72), et/ou dans lequel une chauffe (80) est prévue pour l'optique (72) et/ou dans lequel un dispositif de réglage de position (82) est prévu pour l'optique (72).

6. Phare pour un véhicule avec une optique selon l'une quelconque des revendications 1 à 4 ou avec un agencement d'optique selon la revendication 5.
